# EUROPEAN PATENT APPLICATION

(11) **EP 3 444 058 A1**
(43) Date of publication of application: **20.02.2019**
(21) Application number: 18275123.0
(22) Date of filing: 16.08.2018
(51) Int. Cl.: B23B 47/28, B23Q 9/00, B25H 1/00, B27C 3/00, B27C 3/08, B23B 5/36

(54) **JIG APPARATUS FOR USE IN FORMING HOLES IN A WORKPIECE IN A GUIDED MANNER AND METHOD OF FORMING A HOLE IN A WORKPIECE**

(30) Priority: 18.08.2017 GB 201713250; 21.08.2017 GB 201713373
(71) Applicant: Power Box AG, 6301 Zug (CH)
(72) Inventor: PIKARSKI, Daniel, Yeovil, Somerset BA22 8HZ (GB); BIRD, Simon, Yeovil, Somerset BA22 8HZ (GB); MORRIS, Darrell, Yeovil, Somerset BA22 8HZ (GB); CORCORAN, Michael, Stocksfield, Northumberland NE43 7AL (GB); YATES, Adam, Stocksfield, Northumberland NE43 7AL (GB)
(74) Representative: Wood, Graham

(57) **Abstract**

The invention relates to apparatus for use with a drill bit (118) which is driven to rotate so as to form a hole in a workpiece with which the same is contacted. The apparatus includes guide means (114) with which the drill bit (118) is located and a body with which the workpiece is located and said guide means (114) is movable with respect to the body to cause the drill bit to be advanced along a path which includes an arc portion and, as it is driven to rotate, move into the workpiece to form said hole and allow the hole to be formed in a guided manner with greater accuracy.

## Description

The invention to which this application relates is apparatus, commonly known as jig apparatus, for use with a drill bit which, when rotated, typically by a power tool drill to which the same is attached, allows the forming of a hole in a workpiece.

Drill bits can be used to form different types of holes in workpieces and jig apparatus can be used to guide the movement of the drill bit into the workpiece so that holes can be formed more accurately than if reliance was placed on the user guiding the movement of the drill bit when holding the drill. An example of a type of hole which can be formed is a pocket hole which is now described in more detail but it should appreciated that this is for the purposes of illustration and does not limit the possible usage of the jig apparatus.

Pocket holes are a type of hole which is formed for the reception of a screw to form a joint between two workpieces, typically formed of wood. The holes are typically formed by using a suitably formed drill bit which is driven to rotate and drill into the workpiece adjacent the location at which the joint is to be formed with the hole having a longitudinal axis at an acute angle, such as 10-20 degrees to the surface in which the drill enters the workpiece. The hole is formed inwardly from the surface of the workpiece such that in one drilling operation there is formed a sub-surface pocket for the screw head, a shoulder for the screw head to bear on and a narrower blind pilot hole to guide a self-cutting screw through the edge of the piece of wood to join that workpiece to another workpiece and hence form the joint between the edges of the respective workpieces.

The formation of these holes is normally done using a drill and a jig. The jig typically has a tubular steel drill guide which forms a passage for the drill bit to follow as it passes through the jig and into the workpiece at the required location and angle. The jig is typically clamped to the workpiece to guide the stepped drill bit into the wood at an acute angle in order to form the hole to a suitable depth. A key advantage of pocket hole fixing is that even if the joint is also to be glued, the joint which is formed is relatively solid as soon as the screw is tightened and hence there is no need for further clamping or to wait for adhesives to cure. However the conventional apparatus can be time consuming to fit and requires a number of different components to be used in conjunction. Typically the use of the apparatus including the jig requires a particular number of method steps to be performed and in particular, after each hole is drilled, the power tool and drill bit have to be completely withdrawn from the jig and then set down to one side as the workpiece and jig are relatively moved to a location at which the next hole is to be formed.

The aim of the present invention is to provide jig apparatus in a form which allows holes to be formed in a workpiece and to allow the apparatus to be provided to be used without the need for a drill guide whilst, at the same time ensuring the accuracy of the hole which is formed is at least maintained with respect to those formed using conventional apparatus. A further aim is to use the apparatus with, or as part of a power tool, such as a drill, with a drill bit which, when rotated, causes the formation of the hole in the workpiece. A further aim is to shorten the number of method steps which are required to be performed during the use of the jig and the power tool thereby allowing the drilling procedure to be shortened whilst maintaining the safety of the use of the apparatus.

In a first aspect of the invention there is provided jig apparatus for use with a drill bit which is driven to rotate so as to form a hole in a workpiece with which the same is contacted, wherein said apparatus includes guide means with which the drill bit is located and a body with which the workpiece is located and said guide means is movable with respect to the body to cause the drill bit to be advanced along a path which includes an arc portion and, as it is driven to rotate, move into the workpiece to form said hole.

In one embodiment the apparatus includes a clamping means which serves to clamp the workpiece in a fixed position such that it is the drill bit and in particular the tip of the drill bit, which is moved on the path which includes the arc portion.

In one embodiment the workpiece is clamped to a work surface on the body of the apparatus. In one embodiment the body also includes an alignment fence.

In one embodiment the drill bit approaches and enters the side of the workpiece adjacent said base through an aperture in the body.

Typically the drill bit is rotated as it approaches and enters into the workpiece via a powered motor which may in one embodiment be part of a drill or may be connected to a spindle of the drill bit via a drive belt.

Typically the drill bit can be removed from the workpiece after the hole has been formed to a sufficient extent so as to allow the workpiece to be removed and, if required, a new workpiece introduced and clamped in position without having to wholly remove the drill bit from the apparatus.

In one embodiment the drill bit used is a stepped drill bit and in one embodiment a pocket hole is formed.

In one embodiment an adjusting means is provided to allow the user adjustment of the position of the clamping means to take into account the depth of the workpiece into which the hole is to be drilled.

In one embodiment the apparatus allows a hole to be formed in the workpiece with a longitudinal axis in an angular position in a range of between 10 and 25°, more preferably 12 to 18° to the surface of the workpiece into which the drill is advanced to form the hole.

In one embodiment the apparatus includes a dust extraction passage to allow dust and debris created during the drilling operation to be removed.

In one embodiment the whole path of movement is along an arc.

Typically the arc is formed around a pivot axis located within the body of the apparatus.

In a further aspect of the invention there is provided a jig apparatus for use with a drill bit which is rotated to form a hole in a workpiece, said jig apparatus supporting said workpiece and provided with guide means to guide the movement of the drill bit with respect to the workpiece and wherein the guide means is relatively movable with respect to a body of the jig and the workpiece so as to move the drill bit as it rotates to form the hole in the desired location into the workpiece.

Typically the body includes a rear jaw against which one face of the workpiece is located and an adjustable front jaw assembly which is selectively movable with respect to the base so as to provide a clamping effect on the workpiece by contacting the opposing face of the workpiece.

In one embodiment an adjusting means is provided to allow the user adjustment of the position of the front jaw with respect to the fixed rear jaw. Typically the adjustment is performed in order to allow the gap between the jaws to be selected to suit the particular workpiece which is to be supported by the jig.

**Typically the guide** means is rotatably movable about a pivot axis with respect to the workpiece so as to guide the movement of the drill bit into the workpiece.

Typically the guide means is also linearly movable with respect to the base and the linear movement is towards and away from the workpiece in response to movement of the front jaw with respect to the base.

In one embodiment a gearing assembly is provided between the said guide means and front jaw such that linear adjustment of the front jaw to take into account different widths of workpiece provides a linear movement of the guide means which is at a predefined ratio to the movement of the front jaw. This thereby ensures that the drill bit enters and forms a hole in the workpiece clamped in the jig at that time at the appropriate location and angle.

In one embodiment the jig apparatus allows the hole to be formed with a longitudinal axis in a range of between 10 and 25°, more preferably 12 to 18° to the surface of the workpiece into which the drill bit is advanced to form the hole.

In one embodiment the guide means include location means for a drill to which the drill bit is attached. In an alternative embodiment the guide means include a motor to which the drill bit is attached in order for rotation to be imparted to the same.

In a further aspect of the invention there is provided a method of forming a hole in a workpiece, said method comprising apparatus including a drill including drill bit, a motor for selectively providing a driving force to rotate the drill bit, attaching hole forming apparatus to a work surface, clamping the workpiece in position with respect to said apparatus, locating the said drill bit with the said hole forming apparatus, advancing the rotating drill bit along a path towards and into the workpiece to form the said hole and wherein the said path includes an arc portion..

Typically the entire path is along an arc.

In one embodiment the method includes the steps of clamping the workpiece between first and second jaws of the jig, linearly moving one of the jaws, if required, with respect to the base to move the same into a clamping position for the workpiece, moving guide means for the drill bit in response to movement of the said jaw, advancing the drill bit via the guide means towards the workpiece and, as the drill bit rotates, advancing the drill bit into the workpiece, said movement controlled by pivotal movement of the guide means with respect to the base.

Specific embodiments of the invention are now described with reference to the accompanying drawings; wherein
Figures 1a-e illustrate views of the apparatus in accordance with one embodiment of the invention;
Figures 2a-h illustrate detailed views of the apparatus of Figures 1a and e;
Figures 3a-g illustrate the stages of movement of the drill bit in forming the hole in the workpiece;
Figures 4a-d illustrate a further embodiment of the invention;
Figures 5a-b illustrate in detail the movement of the drill bit along the path of movement in accordance with one embodiment of the invention;
Figures 6a and b illustrate views of apparatus in accordance with a further embodiment of the invention;
Figures 7a-d illustrate views of apparatus in accordance with a yet further embodiment of the invention;

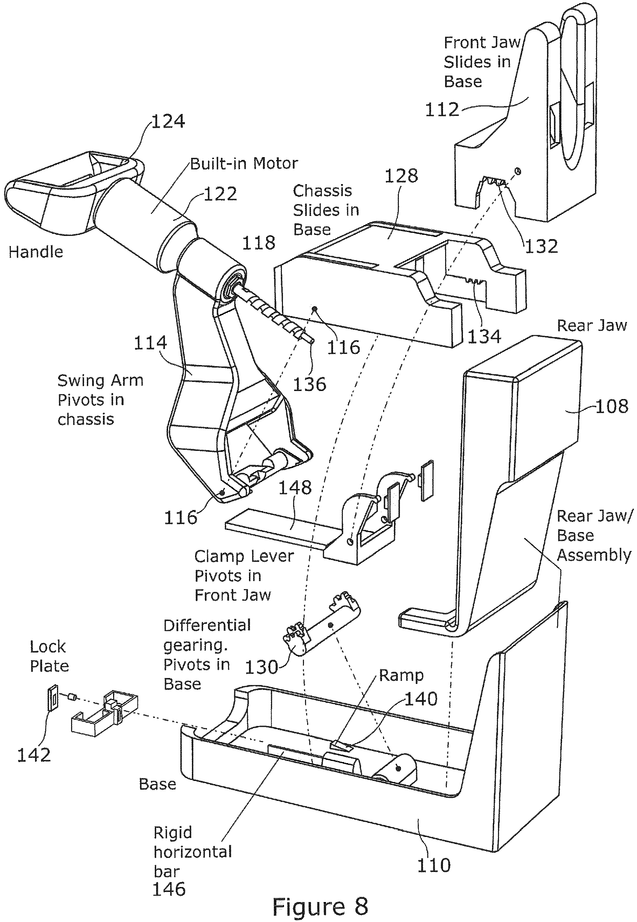

Figure 8 illustrates an exploded diagram of the components of the apparatus in accordance with the yet further embodiment of the invention in detail;
Figure 9a-h illustrate views of the yet further embodiment of the jig apparatus in position before the hole is formed;
Figures 10a-f illustrate views of the yet further embodiment of the jig apparatus in position as the hole is formed in the workpiece; and
Figures 11a-c illustrate views of the drill bit as it is moved into the hole forming position.

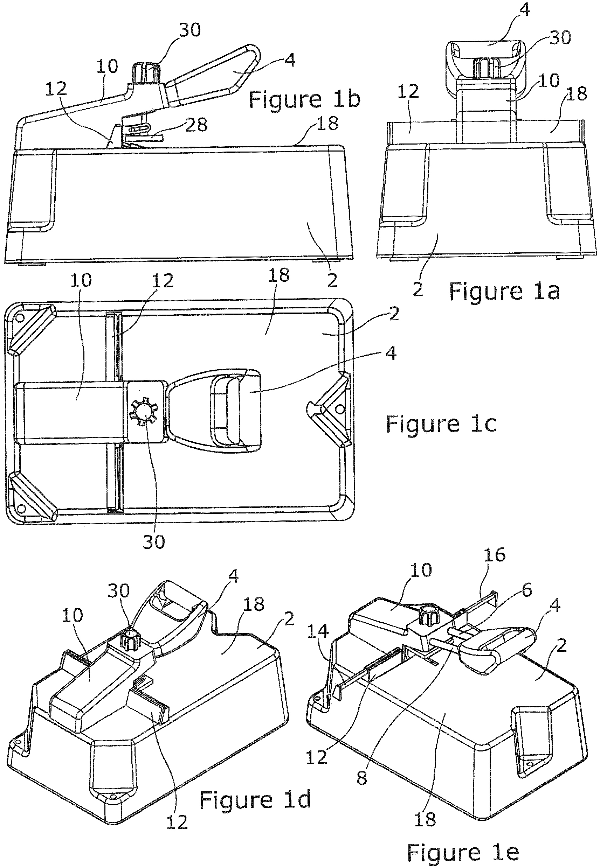

Referring now to the Figures 1a-e there is illustrated the jig apparatus in accordance with one embodiment of the invention which includes a body 2 with a handle 4 which is slidingly located with respect to the body 2 via arms 6,8 mounted in an assembly 10 on the body 2 and which is positioned in associated with a fence 12 for the workpiece and which, in this embodiment has extendable portions 14, 16 which can be selectively moved by the user of the apparatus. The workpiece is provided to be located on the top surface 18 of the body 2.

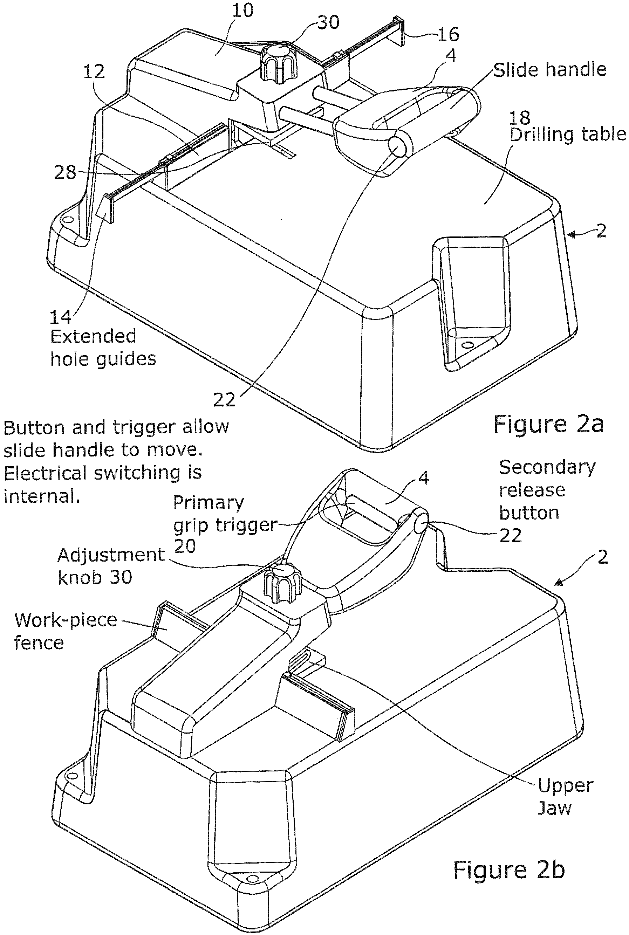

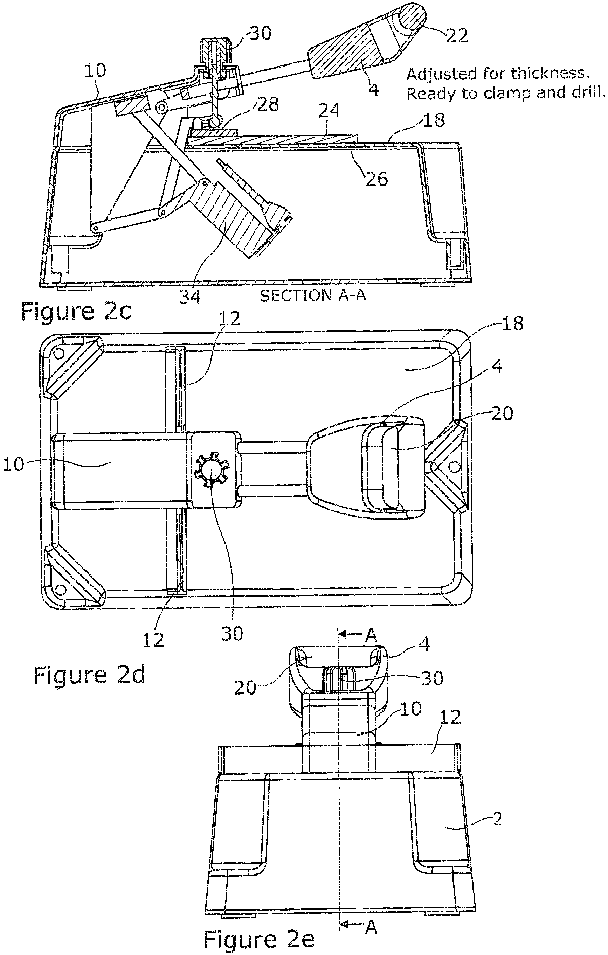

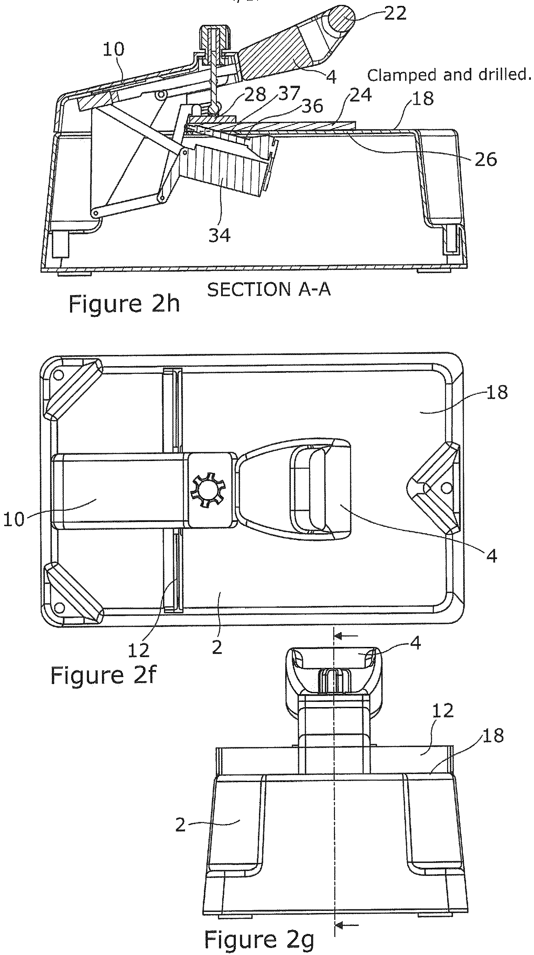

The apparatus is shown in more detail in Figures 2a-h and it will be seen that the handle 4 includes a trigger 20 and a release button 22 for selective operation by the user and, when operated, the handle 4 can be slidingly moved with respect to the body 2 by operating the trigger and handle and in one embodiment these are required to be operated to allow power to be provided to a motor to rotate the drill bit.

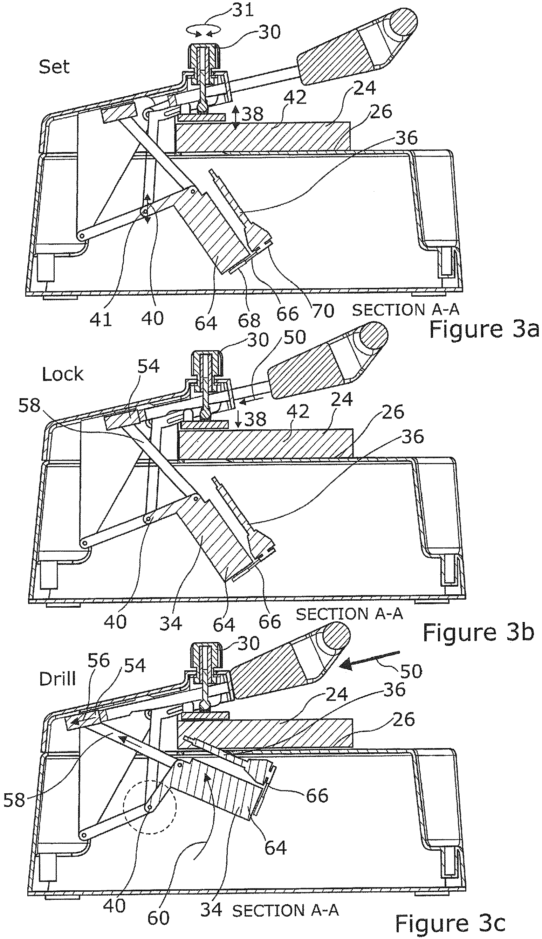

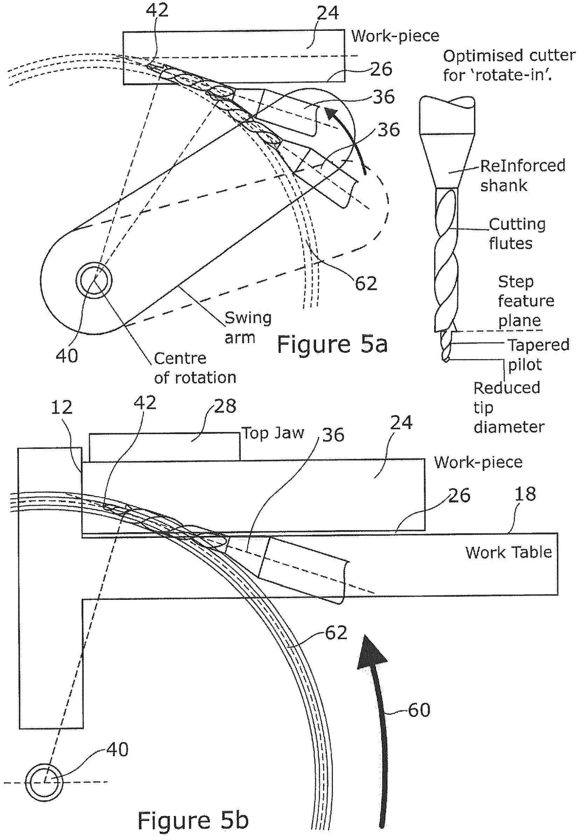

In this embodiment a 12mm to 50mm thick work-piece 24 can be selectively clamped to the work surface 18, against the aligning fence 12 to allow a pocket hole to be drilled into its lower face 26 by the drill bit passing through an aperture 37 in the surface 18 and into the workpiece 24. The workpiece 24 is shown in position in Figures 2c and 2h and an integrated clamp 28 mounted as part of the assembly 10 holds the workpiece in position. The clamping position of the integrated clamp 28 is adjusted by the user to suit the particular depth of the workpiece 24 by rotation of the adjuster 30. The correct hole position and drill depth for a given thickness of workpiece are set by the position of the adjuster 30 and the mechanical synchronization of the drill bit position, depth and angle via a linkage assembly of the handle arms 6,8 adjuster 30 and clamping means 28, the assembly 10 and a drill bit guide means holder 34 which will now be described in more detail with reference to Figures 3a-g and Figures 5a-b.

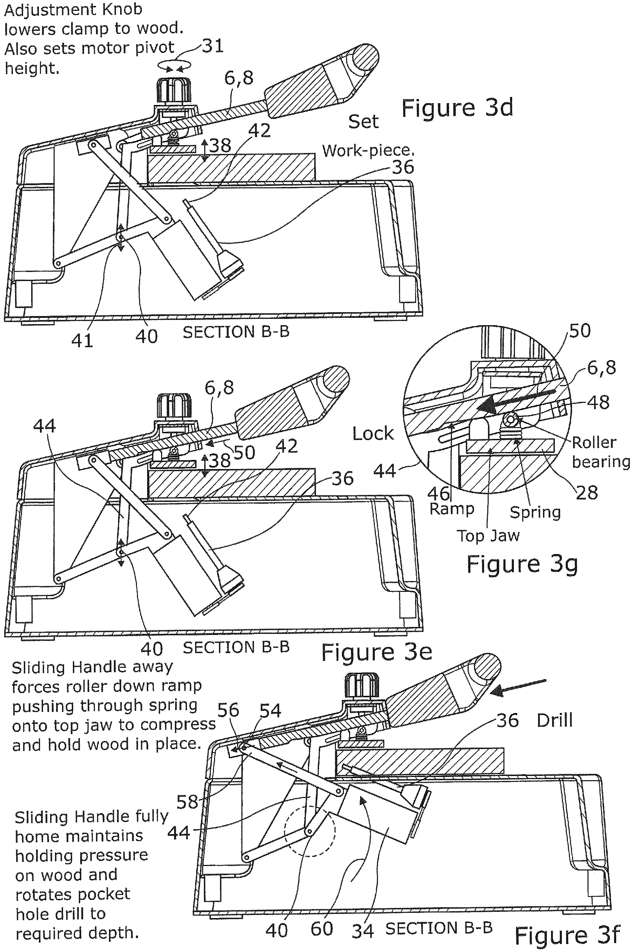

To achieve the movement of the drill bit 36 from the start position shown in Figures 3a and 3d respectively shown with different thickness of workpiece 24 in position on the surface 18, the adjuster 30 is rotated as indicated by arrow 31 and the clamping means 28 is advanced downwardly as indicated by arrow 38 to contact and clamp the workpiece 24. The pivot 40 for the guide means to which the drill bit is attached is mechanically linked so that as this occurs the guide means pivot 40 raises and lowers its position as indicated by the arrows 41 to react to the chosen thickness of the workpiece 24. Thus, when the clamping means 28 advances toward the table surface 18, the swing arm pivot axis 40, and hence the point 42 of the drill bit 36 on guide means holder 34, move approximately half that distance in the same direction to keep the drill bit longitudinal axis pointing at the middle of the workpiece edge 26. When the appropriate clamping has occurred for the particular workpiece, the apparatus is locked in that position as indicated in Figures 3b and 3e respectively. To control the depth of cut, the guide means swing arm 44 rotation is progressively limited by a ramp 46 with increased thickness of the workpiece 24, thus also modifying the drill angle to be 3-5 degrees closer to the workpiece face when drilling thinner workpieces. This is illustrated in Figure 3g which shows in detail the arrangement between the sliding arms 6, 8 of the handle 4, the swing arm 44 and a biased roller bearing 48 of the clamping means 28.

The sliding handle 4 controls the gripping of the workpiece 24 in the first stage of its movement in the direction of arrow 50 by forcing the roller bearing 48 connected via spring 52 to the clamping means 28 down a shallow incline on the sliding handle 4. The second stage of movement of the sliding handle 4 maintains the pressure on the clamping means 28 and also rotates, via linear force applied to the component 54 as indicated by arrow 56 in Figures 3c and 3f, the mechanical pull-bar 58, which is connected to the component 54, the drill bit holder 34 around the pivot axis 40 as indicated by arrow 60.

This movement acts to plunge the tip 42 of drill bit 36, which is rotating under the influence of a motor (not shown) to which the drill bit is connected, along an arcuate path 62 and into the work-piece 24 as illustrated in Figures 3c, 3f and Figures 5a and b and so form the hole in the workpiece to the required depth.

Withdrawal of the sliding handle 4 in the opposite direction to arrow 50 moves the assembly in the opposite direction and hence withdraws the drill bit 36 out from the workpiece 24 before taking the pressure off the clamping means 28, allowing the work-piece 24 to be removed, or moved ready to re-clamp and cut the next hole therein with the drill bit still held by the locator 34. There can also be provided a dust extraction passage from the back or sides of the body 2 and an indicator scale can be provided to confirm the thickness of the workpiece 24 which is clamped in position.

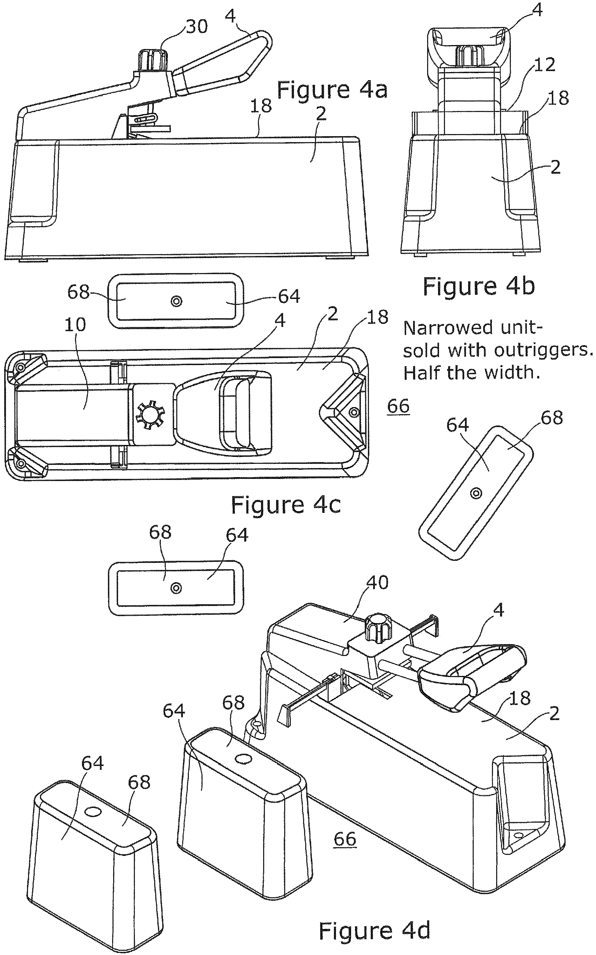

Figures 4a-d illustrate a further embodiment of the invention in which the same reference numerals are used for common features. The main difference in this embodiment is that the body is substantially thinner in width and therefore, in order to provide support for the workpiece when positioned on the surface 18 and with respect to the fence 12, and hence ensure that the workpiece lies in the correct plane, supports 64 can be selectively positioned around the body on the work surface 66 and which have an upper surface 68 which lie substantially in line with the surface 18 of the body 2.

In this manner the rotating drill bit can be advanced into the workpiece, with the drill bit following a path in an arc around the pivot axis 40 and without the need for the drill bit to be inserted into and along a drill guide. The approach of the drill bit along the path is guided by the guide means swing arm which pivots around the axis with the longitudinal axis of the drill bit tangentially aligned to the circle described by the swing arm at or close to a plane described behind the tip 42 of the drill bit (such as the step feature if the drill bit is a step drill bit as shown for forming a pocket hole. The axial stability of the drill bit 36 on the end of the swing arm drill bit holder 34 is achieved via the motor spindle bearings or suitably separated gearbox bearings of the drill or motor to which the drill bit is attached, much like a router spindle. In one embodiment, to reduce the volume required under the work-surface for the motor assembly, a motor 64 is positioned alongside the drill bit 36 and held on the holder 34, with a gear or toothed belt drive chain 66 being provided from the motor spindle 68 to the drill bit spindle 70.

As the drill bit approaches the work-piece 24 in an arcing movement, the drill bit point 42 enters the work-piece in approximately the same orientation as with a linear approach. As the drill rotates into the wood the sides of the drill also remove material, so the drill fluting is ground with a chisel edge, like a router bit or slot-drill to cut sideways efficiently.

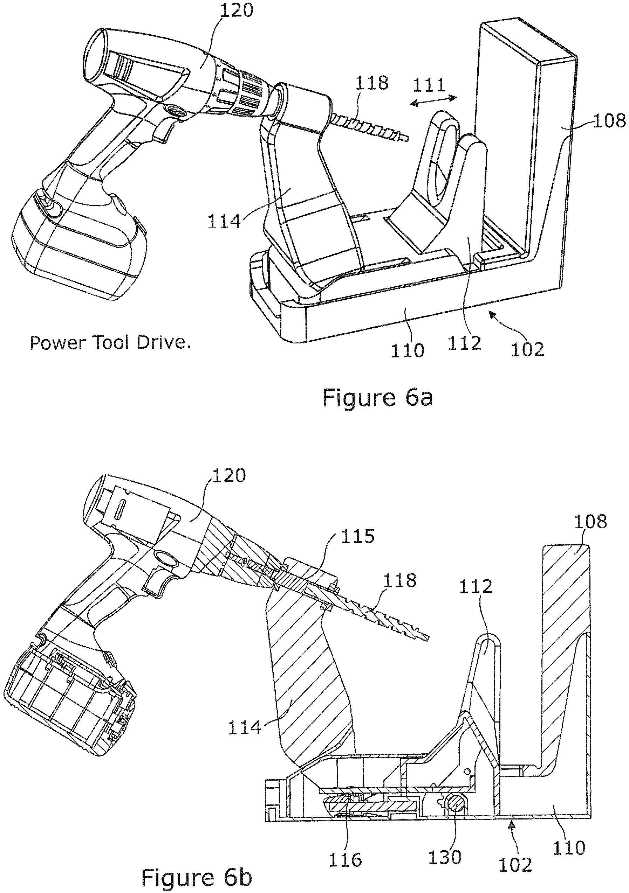

Referring now to the Figures 6a-b there is illustrated jig apparatus 102 in accordance with a further embodiment of the invention which is again shown as being provided for use to drill a pocket hole in the workpiece 104 which is clamped in position between a fixed jaw 108 which is formed as part of, or is attached to, the body 110 and a movable jaw assembly 112 which is linearly adjustable with respect to the body 110, as indicated by arrow 111.

A guide means 114 is provided which is pivotally movable with respect to the base 110 about pivot axis 116 and in this embodiment the guide means includes holder means 115 to allow a drill bit 118 to be located there with and in turn the drill 120 to which the drill bit is connected to be rotated thereby is also located with the guide means.

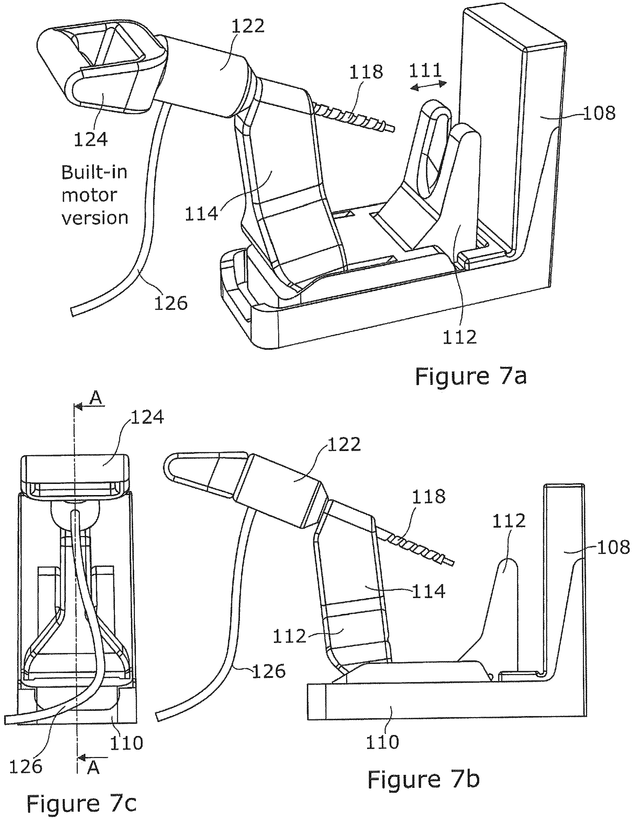

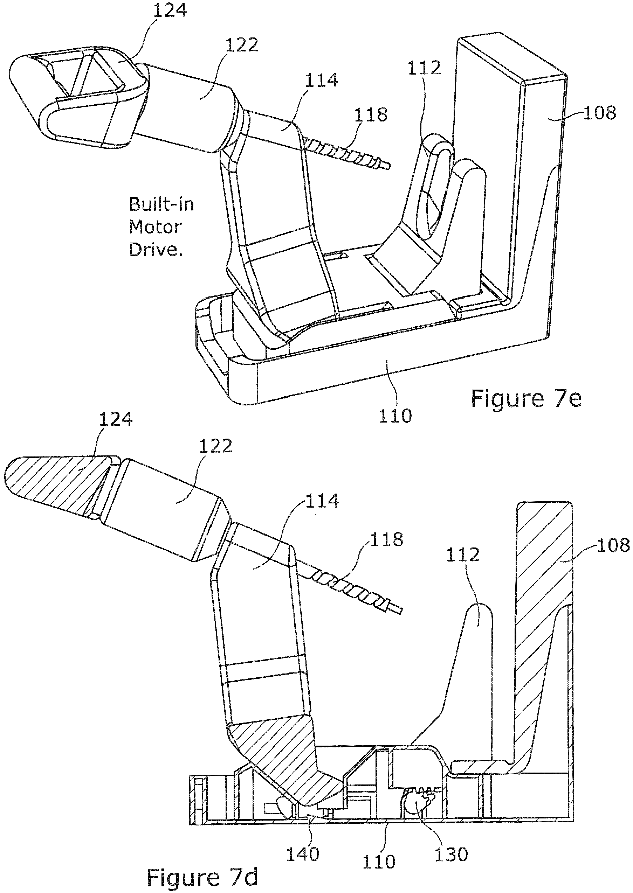

Figures 7a-e illustrate a yet further embodiment of the invention and in this embodiment the similar features to the embodiment of Figures 6a-b are given the same reference numerals and the principal difference is that in this embodiment the drill bit 118 is connected to a motor 122 which is provided integrally with the guide means 114 and hence jig apparatus 102. The motor assembly 122 also includes a handle 124 to allow user operation of the guide means 114. The motor assembly is provided with power to provide rotation of the drill bit 118, via a power supply cable 126.

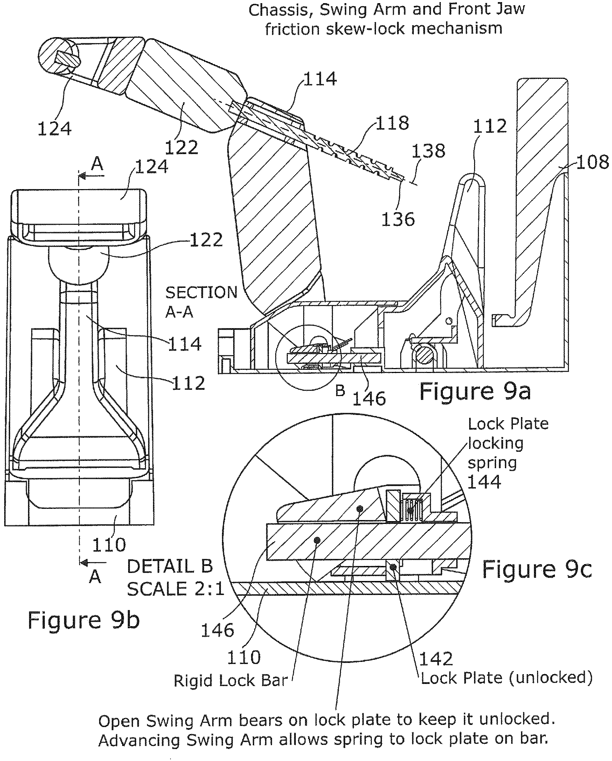

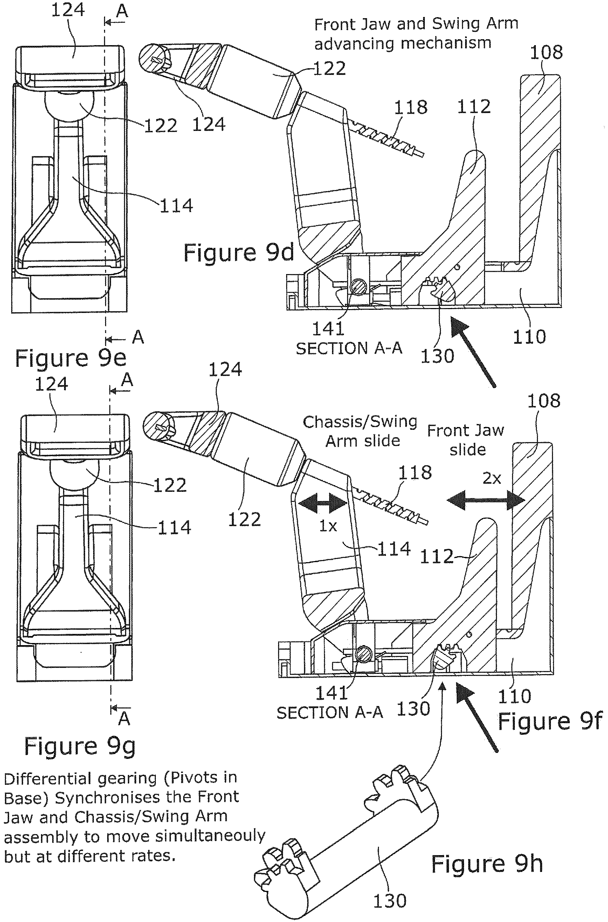

The jig apparatus body or base 110 is typically clamped or screwed to a work surface and receives the workpiece 104, typically of wood, which can be selected to have the required thickness within the range of between 12mm and 50mm thick. The workpiece 104 is clamped in position when the apparatus is in the form illustrated in Figures 9a-h with the drill bit 118 and guide means 114 withdrawn from the movable clamp 112. In accordance with the invention the correct hole position and depth of the same for a given workpiece thickness is set automatically as a result of the mechanical synchronisation of the relative position of the movable jaw 112 with respect to the base 110 and the drill position, depth and angle which is set via the guide means 114 position with respect to the base 110. To achieve this, the movable jaw 112 is provided in connection with a chassis 128 mounted in the base and which chassis also includes the guide means 114 pivot 116 and hence carries the same. These are linked by a differential gearing assembly 130 which engages with teeth 132 on the movable jaw 112 and teeth 134 on the chassis 128 and the gearing ratio for movement of the guide means 114 caused by movement of the movable jaw 112 (and vice versa) is such that movement of the movable jaw 112, also causes movement of the guide means 114 in the same direction but with different rates of movement. In one embodiment there is a 2:1 ratio such that when the movable jaw 112 advances toward the fixed jaw 108 by a distance 2X, the guide means axis 116 and hence the drill bit point 136 move approximately half that distance 1X as indicated in Figure 9f so as to keep the longitudinal axis 138 of the drill bit 118 pointing at the middle of the workpiece edge. To control the depth of the hole to be formed in the workpiece 104, the guide means 114 reach is limited by a ramp 140 as the gap between the jaws 112,108 widens, which also modifies the drill bit longitudinal axis 138 angle to be 3-5 degrees closer to the workpiece plane when drilling thinner workpieces 104.

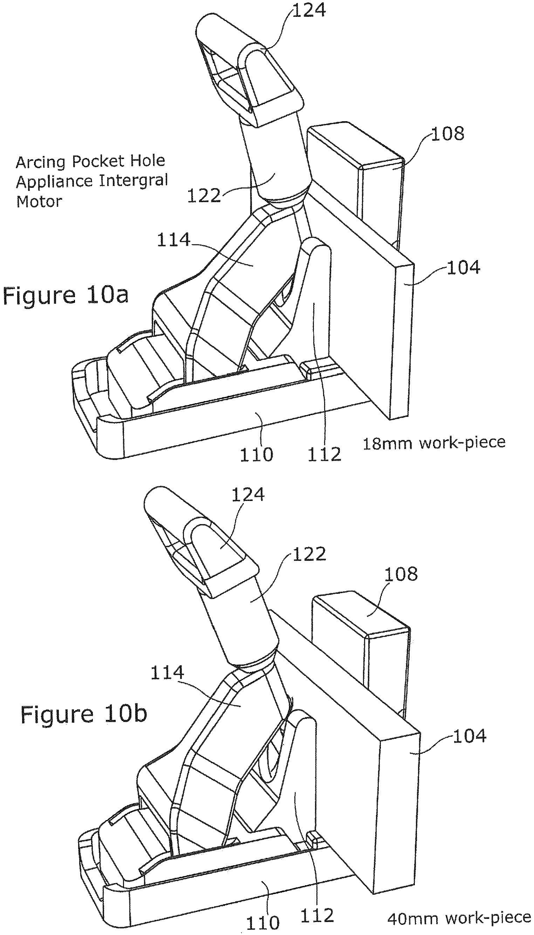

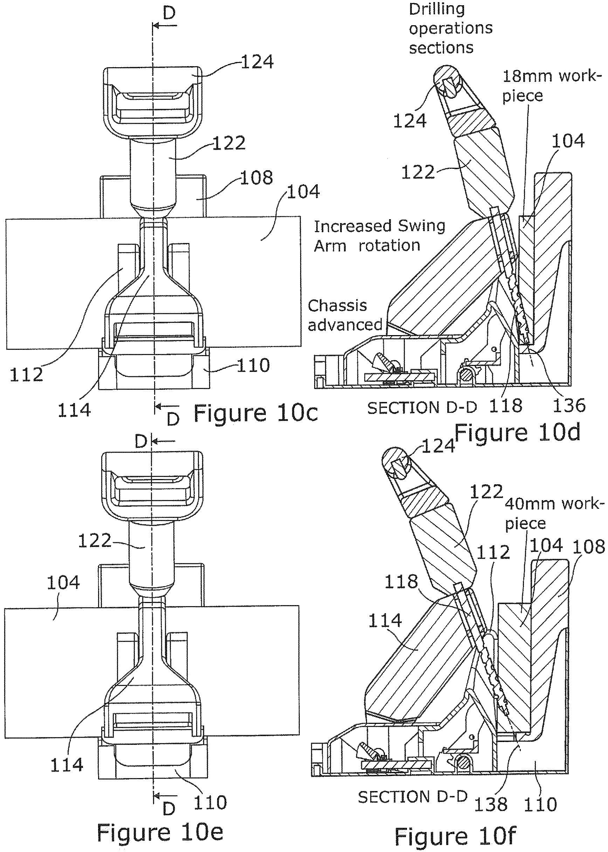

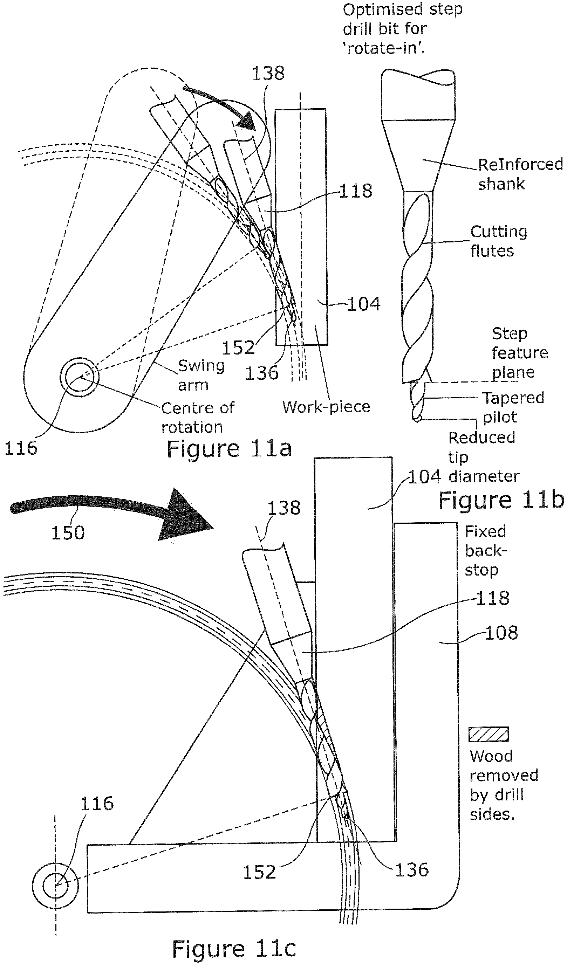

The guide means 114 and chassis 128 control the clamping of the workpiece 104 in two stages. In a first stage; when the motor/drill handle 124 is pushed forwards by the user towards the workpiece, a spring 141 in the guide means 114 resists, causing the linear movement of the movable jaw 112 forward to meet the workpiece 104, and clamp it against the rear jaw 108. In the second stage, further pressure on the guide means 114 towards the workpiece 104 overcomes the spring and rotates the guide means, with the next 5-10 degrees of rotation releasing a lock plate 142 to skew and lock via spring-assistance 144, on a rigid horizontal member 146 formed with or attached to the base 110. The movable jaw 112 is now unable to move away from the jaw 108 and so continued rotation of the guide means 114 about the pivot axis 116 applies sprung pressure to the work-piece through the clamp lever 148, and then continued rotational movement of the guide means 114 towards the workpiece as indicated by arrow 150 in Figures 11a and c causes the drill bit 118 and point 136 to continue through its arc to enter the workpiece 104 and drill the hole, as shown when in the position illustrated in Figures 10a-f. When the guide means 114 is returned to its original position, the drill bit 118 is removed from the workpiece 104 and the assembly returns to it's start configuration. At the stage in the return path when the guide means is withdrawn only to the point of releasing the clamp lever 148, the work-piece 104 is free to be moved, in one possibility by sliding the same along and re-clamping it for the next hole to be cut, or the workpiece 104 can be removed and a new workpiece introduced.

Dust extraction will typically be from the back and/or sides of the rear jaw assembly and an indicator scale, viewable through a window in the movable jaw assembly can be provided to allow confirmation of the wood thickness selection for the drill guide height.

There is therefore provided in accordance with this embodiment of the invention a drilling jig apparatus which can be used to form a hole in a workpiece by advancing the rotating drill bit into the workpiece in an arc around a pivot axis and the approach of the step drill is guided by the guide means 114 which pivots around the axis 116 at its base 110. The axis 138 of the drill is tangentially aligned to the circle described by the guide means 114 at, or close to, the plane described by the step feature 152 behind the tip 136 of the drill bit 118 as shown in Figures 11a and c. The drill bit 118 is supported at the free end of the guide means 114 by locating means 115 in the form of a pair of ball and/or roller bearings spaced apart for minimum axial deviation. As the drill bit approaches the work-piece 104 in an arc, the drill tip 136 enters the work-piece 104 in approximately the same orientation as a linear approach. As the drill bit 118 rotates into the workpiece 104 the sides of the drill bit 118 also need to remove material, so the drill fluting is ground like a router or slot-drill to cut sideways efficiently and so the hole is accurately created at an angle, typically in the range of 12-20 degrees to the surface of the workpiece into which the drill bit enters.

## Claims

1. Jig apparatus for use with a drill bit which is driven to rotate so as to form a hole in a workpiece with which the same is contacted, wherein said apparatus includes guide means with which the drill bit is located and a body with which the workpiece is located and said guide means is movable with respect to the body to cause the drill bit to be advanced along a path which includes an arc portion and, as it is driven to rotate, move into the workpiece to form said hole.

2. Apparatus according to claim 1 wherein the entire movement path is along an arc formed at a spaced distance from a pivot axis located within the body of the apparatus.

3. Apparatus according to claim 1 wherein the body includes an alignment fence.

4. Apparatus according to claim 1 wherein the drill bit approaches the workpiece through an aperture in the body and/or a jaw of clamping means located on the body.

5. Apparatus according to claim 1 wherein the drill bit is rotated as it approaches and enters into the workpiece via a powered motor provided as part of a drill power tool with which the drill bit is engaged or connected to a spindle of the drill bit via a drive belt.

6. Apparatus according to claim 1 wherein a drill hold assembly is provided to allow the drillbit to be removed from the workpiece to a sufficient extent to allow the workpiece in which the hole has been formed to be removed from the apparatus and a new workpiece introduced and clamped in position with respect to the jig with the drill bit retained in position with respect to guide means of the jig apparatus.

7. Apparatus according to claim 1 wherein clamping means are provided for the workpiece which include a first jaw against which one face of the workpiece is located and an adjustable jaw assembly which is selectively movable with respect to the base so as to provide a clamping effect on the workpiece by contacting the opposing face of the workpiece and the adjustment allows workpieces with a range of depths to be clamped in position.

8. Apparatus according to claim 7 wherein the guide means are linearly movable with respect to the base towards and away from the workpiece in response to movement of the adjustable jaw with respect to the body.

9. Apparatus according to claim 8 wherein a gearing assembly is provided between the said guide means and adjustable jaw such that linear adjustment of the adjustable jaw to take into account different widths of workpiece provides a linear movement of the guide means which is at a predefined ratio to the movement of the adjustable jaw.

10. Apparatus according to claim 8 wherein the guide means and a chassis of the body control the clamping of the workpiece in a first stage when a handle connected to the guide means is moved towards the workpiece on the body a spring in the guide means resists, causing the linear movement of the movable jaw towards contact with the workpiece and exert a clamping force against the fixed jaw and a second stage wherein further pressure on the guide means to move towards the workpiece overcomes the spring and rotates the guide means to release a lock plate to lock the position of the clamping and hence the workpiece with the body.

11. Apparatus according to claim 1 wherein the drill bit is driven to rotate by a power tool drill to which the drill bit is engaged and said power tool drill is supported by the guide means.

12. Apparatus according to claim 1 wherein the drill bit is driven to rotate by a motor provided as part of the said jig apparatus and a drive belt connecting the drill bit holder and the motor.

13. Apparatus according to claim 1 wherein the apparatus includes one or more supports to be selectively positioned around the body on a work surface on which the jig apparatus is located which have an upper surface which lies substantially in line with the surface of the body on which the e workpiece is located so as to provide support for the workpiece during the hole forming therein.

14. A method of forming a hole in a workpiece, said method including providing a jig apparatus with guide means for a drill bit, a motor for selectively providing a driving force to the drill bit, attaching or placing the jig apparatus base onto a work surface, clamping the workpiece between first and second jaws of the jig, linearly moving one of the jaws, if required, with respect to the base to move the same into a clamping position for the workpiece, wherein moving guide means for the drill bit in response to movement of the said jaw to advance the drill bit towards the workpiece and, as the drill bit rotates, advancing the drill bit into the workpiece, said movement controlled by pivotal movement of the guide means with respect to the base.

15. A method of forming a hole in a workpiece, said method comprising using a drill bit, a motor for selectively providing a driving force to the drill bit, attaching hole forming apparatus to a work surface, clamping the workpiece in position with respect to said apparatus, locating the drill and drill bit with the said hole forming apparatus, advancing the rotating drill bit along a path towards and into the workpiece to form the said hole and wherein the said path includes an arc portion.
